# EUROPEAN PATENT APPLICATION

(11) **EP 3 361 440 A1**
(43) Date of publication of application: **15.08.2018**
(21) Application number: 17800694.6
(22) Date of filing: 24.03.2017
(51) Int. Cl.: G06Q 40/08

(54) **DATA PROCESSING METHOD, APPARATUS, DEVICE, AND COMPUTER READABLE STORAGE MEDIUM**

(30) Priority: 29.12.2016 CN 201611266387
(71) Applicant: Ping An Technology (Shenzhen) Co., Ltd., Shenzhen, Guangdong 518000 (CN)
(72) Inventor: The designation of the inventor has not yet been filed
(74) Representative: Osterhoff, Utz
(86) International application number: PCT/CN2017/077992
(87) International publication number: WO 2018/120456

(57) **Abstract**

The present disclosure provides a data processing method, including: receiving an expiration redemption file sent by a channel side and a mandatory redemption file sent by a third party system; when a verification of the expiration redemption file succeeds and the expiration redemption file is a closed one, judging whether redemption data contained in the expiration redemption file is identical with pre-stored purchase data; when the redemption data is identical with the pre-stored purchase data, and the mandatory redemption file requires full redemption on expiration, matching the expiration redemption file with the mandatory redemption file; and when the expiration redemption file is identical with the mandatory redemption file, generating a result confirmation file, informing the third party system, and sending the result confirmation file to the channel side. The present disclosure further provides a data processing device, a data processing apparatus, and a computer-readable storage medium. The present disclosure improves the convenience of data processing of the insurance system.

## Description

### CROSS REFERENCE OF RELATED APPLICATIONS

The present application claims the benefit of Chinese Application No. 201611266387.0, entitled "Data Processing Method and Device" filed on December 29, 2016, the entire content of which is incorporated herein in its entirety.

### TECHNICAL FIELD

The present disclosure relates to fields of insurance systems, and particularly, to a data processing method, device, and apparatus, and a computer-readable storage medium.

### BACKGROUND

An insurance system such as a social security system may correspond to multiple channel sides. When the insurance system transfers data with different channel sides, since processes corresponding to different channels are different, re-development of the insurance system is required. For example, as the number of the channel sides corresponding to the insurance system increases during the redemption process, the complexity of the development of the insurance system correspondingly increases; in addition, due to the inconvenient data transferring between the insurance system and the channel side, it is inconvenient to process the data.

### SUMMARY OF THE DISCLOSURE

A data processing method, device, and apparatus, and a computer-readable storage medium are provided in the present disclosure, for improving the convenience of data processing of the insurance system.

According to a first aspect of the present disclosure, a data processing method being applicable in an insurance system is provided, including:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

According to a second aspect of the present disclosure, a data processing device being applicable in an insurance system is provided, including:
a receiving module, configured for receiving an expiration redemption file sent by a channel side and a mandatory redemption file sent by a third party system;
a first judging module, configured for, when a verification of the expiration redemption file succeeds and the expiration redemption file is a closed one, judging whether redemption data contained in the expiration redemption file is identical with pre-stored purchase data;
a matching module, configured for, when the redemption data contained in the expiration redemption file is identical with the pre-stored purchase data and the mandatory redemption file requires full redemption on expiration, matching the expiration redemption file with the mandatory redemption file; and
a feedback module, configured for, when the expiration redemption file is identical with the mandatory redemption file, generating a result confirmation file, informing the third party system, and sending the result confirmation file to the channel side.

According to a third aspect of the present disclosure, a data processing apparatus is provided, including a storage medium and a processor; the processing being configured for executing a data processing program stored in the storage medium to perform following steps:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

According to a fourth aspect of the present disclosure, a computer-readable storage medium is provided; the computer-readable storage medium has one or more programs stored therein which, when be executed by one or more processors, causes the one or more processors to perform following steps:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

According to the present disclosure, the insurance system verifies the expiration redemption file after receiving the expiration redemption file sent by the channel side and the mandatory redemption file sent by the third party system; and judges, when the verification of the expiration redemption file succeeds and the expiration redemption file is a closed one, whether the redemption data contained in the expiration redemption file is identical with the pre-stored purchase data. The insurance system matches the expiration redemption file with the mandatory redemption file when the redemption data is identical with the pre-stored purchase data and the mandatory redemption file requires full redemption on expiration, generates the result confirmation file to inform the third party system when the expiration redemption file is identical with the mandatory redemption file, informs the third party system, and sends the result confirmation file to the channel side. Thus, the insurance system can redeem the fund product purchased by the channel side conveniently, and thus improve the convenience of data processing of the insurance system.

### BRIEF DESCRIPTION OF THE DRAWINGS

FIG. 1 is an exemplary process flow diagram illustrating a data processing method in accordance with a first embodiment of the present disclosure;
FIG. 2 is an exemplary process flow diagram illustrating a method in accordance with a second embodiment of the present disclosure;
FIG. 3 is an exemplary process flow diagram illustrating a method in accordance with a third embodiment of the present disclosure;
FIG. 4 is an exemplary functional block diagram illustrating a data processing device in accordance with a first embodiment of the present disclosure;
FIG. 5 is an exemplary functional block diagram illustrating a data processing device in accordance with a second embodiment of the present disclosure;
FIG. 6 is an exemplary functional block diagram illustrating a data processing device in accordance with a third embodiment of the present disclosure; and
FIG. 7 is an exemplary structural schematic diagram illustrating a hardware environment for implementing the data processing method and the data processing device of the above embodiments.

### PREFERRED EMBODIMENTS

For clearly understanding technical features, purpose, and effect of the present disclosure, embodiments are given in detail hereinafter with reference to the accompanying drawings.

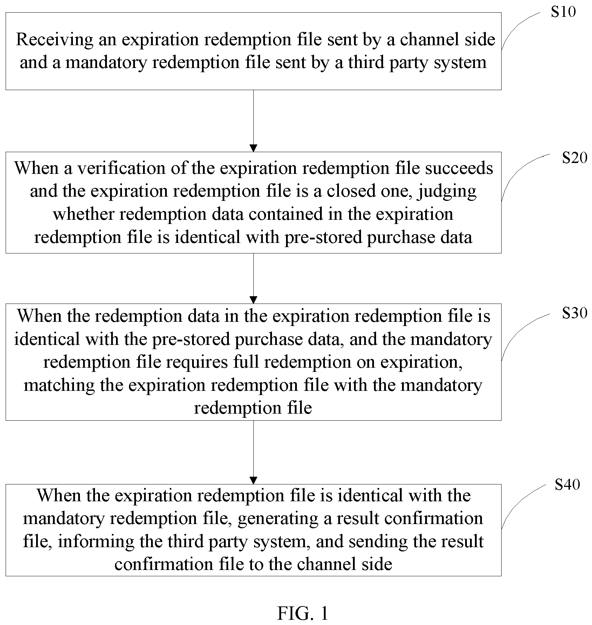

Referring to FIG. 1, a data processing method in accordance with a first embodiment is provided. The method includes steps as follows.

Step S10, receiving an expiration redemption file sent by a channel side and receiving a mandatory redemption file sent by a third party system.

In an embodiment, the data processing method can be implemented in an insurance system which may be a social security system. The following descriptions are given based on that the insurance system is the social security system. The redemption of the fund may be an active redemption initiated by the client or a mandatory redemption initiated by the third party. Taking the mandatory redemption as an example, during the mandatory redemption of the fund initiated by the third party, when the fund product is redeemed through the social security system, an expiration redemption process is performed through the channel side, that is, the channel side sends the expiration redemption file to the social security system and the social security system receives the expiration redemption file sent by the channel side.

The channel side may be one which has built cooperation relationship with the social security system such as Lujinsuo, Wechat, and Jingdong. The expiration redemption file may be a standard template pre-configured in the social security system. The channel side generates the expiration redemption file by improving the standard template. The expiration redemption file may contain information including a transaction serial number, a transaction time, a bank account, a certificate type, personal information, a contact number, etc.

When the mandatory redemption of expired purchased fund product is initiated by the third party system, the third party system sends the mandatory redemption file to the social security system through an interface table interacted with the social security system. In some embodiments, the social security system may be a bank system which has built cooperation relationship with the social security system such as the TA system of Hang Seng Bank.

Step S20, when a verification of the expiration redemption file succeeds and the expiration redemption file is a closed one, judging whether redemption data contained in the expiration redemption file is identical with pre-stored purchase data.

The social security system verifies the received expiration redemption file. The verification of the expiration redemption file may include a physical verification and a business verification. The physical verification is configured for verifying a length and a numerical type of the expiration redemption file, while the business verification is configured for verifying an ID number or the bank account in the expiration redemption file.

The social security system at first judges whether the physical verification succeeds or not. When the physical verification fails, the social security system outputs prompt information such that an administrator of the system can perform operations according to the prompt information; when the physical verification succeeds, the social security system judges whether the business verification succeeds or not. When the business verification fails, the social security system outputs prompt information such that the administrator of the system can perform operations according to the prompt information; when the business verification succeeds, the social security system analyzes and stores the expiration redemption file in a temporary table, and judges whether the expiration redemption file is a closed one, that is, judges whether a period of the expiration redemption file is fixed.

When the expiration redemption file is not a closed one, the social security system outputs prompt information such that the administrator of the system can perform operations accordingly. When the expiration redemption file is a closed one, the social security system judges whether the redemption data contained in the expiration redemption file is identical with the pre-stored purchase data.

When the redemption data is not identical with the pre-stored purchase data, the social security outputs prompt information read in that the redemption data is not identical with the pre-stored purchase data, such that the administrator of the system can perform operations accordingly.

Step S30, when the redemption data contained in the expiration redemption file is identical with the pre-stored purchase data, and the mandatory redemption file requires full redemption on expiration, matching the expiration redemption file with the mandatory redemption file.

When the redemption data in expiration redemption file is identical with the pre-stored purchase data, the expiration redemption file is stored into a redemption business table from the temporary data to finish the redemption application, such that the expiration redemption file can be compared with data from a third party system. In addition, whether the mandatory redemption file requires full redemption on expiration or not is judged; and the mandatory redemption file is matched with the expiration redemption file pre-stored in the redemption business table when the mandatory redemption file requires full redemption on expiration.

Step S40, when the expiration redemption file is identical with the mandatory redemption file, generating a result confirmation file, informing the third party system, and sending the result confirmation file to the channel side.

When the expiration redemption file is identical with the mandatory redemption file, it indicates that the redemption is successful, thus, the result confirmation file is generated and sent to the third party system to inform the third party system. The result confirmation file is also sent to the channel side to inform the channel side that the redemption is successful. The result confirmation file includes multiple pieces of data including information of the channel side and information related to the redemption and so on.

It is understood that when the redemption of the fund is actively initiated by the client through the channel side, the client performs the expiration redemption process through the channel side, that is, the channel side sends the expiration redemption file to the social security system and the social security system receives the expiration redemption file sent by the channel side. The social security system then verifies the expiration redemption file; and judges, when the verification succeeds, whether the expiration redemption file is a closed one. When the expiration redemption file is a closed one, the social security system judges whether the redemption data contained in the expiration redemption file is identical with the pre-stored purchase data or not. When the redemption data is identical with the pre-stored purchase data, the social security system sends the redemption data to the third party system. After receiving the redemption fund from the third party system based on the redemption data, the social security system sends the redemption fund to the channel side to finish the redemption of the fund.

According to the method of the present disclosure, the social security system verifies the expiration redemption file after receiving the expiration redemption file sent by the channel side and the mandatory redemption file sent by the third party system; and judges, when the verification of the expiration redemption file succeeds and the expiration redemption file is a closed one, whether the redemption data contained in the expiration redemption file is identical with the pre-stored purchase data. The social security system matches the expiration redemption file with the mandatory redemption file when the redemption data is identical with the pre-stored purchase data and the mandatory redemption file requires full redemption on expiration, generates the result confirmation file when the expiration redemption file is identical with the mandatory redemption file, informs the third party system, and sends the result confirmation file to the channel side. Thus, the social security system can redeem the fund product purchased by the channel side conveniently, improving the convenience of data processing of the social security system.

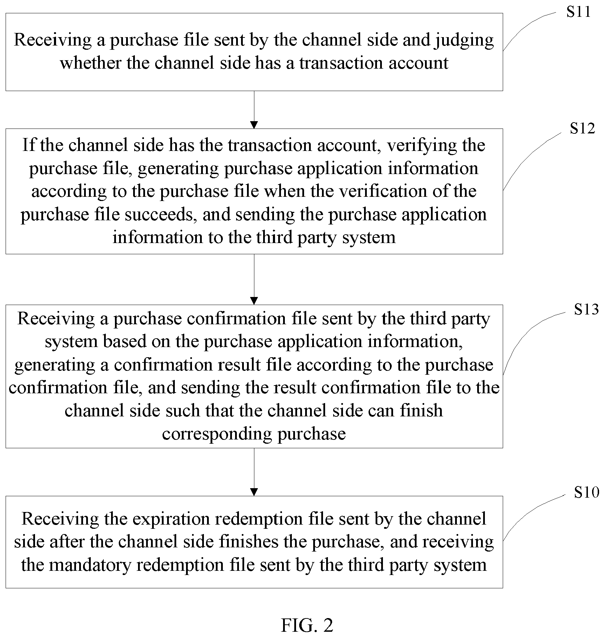

Referring to FIG. 2, based on the first embodiment, a data processing method in accordance with a second embodiment is provided. Based on the first embodiment, the method of the second embodiment further includes following steps before step S10.

Step S11, receiving a purchase file sent by the channel side and judging whether the channel side has a transaction account.

Step S12, if the channel side has the transaction account, verifying the purchase file, generating purchase application information according to the purchase file when the verification of the purchase file succeeds, and sending the purchase application information to the third party system.

Step S13, receiving a purchase confirmation file sent by the third party system based on the purchase application information, generating a confirmation result file according to the purchase confirmation file, and sending the result confirmation file to the channel side such that the channel side can finish corresponding purchase.

Accordingly, step S10 includes receiving the expiration redemption file sent by the channel side after the channel side finishes the purchase, and receiving the mandatory redemption file sent by the third party system.

In this embodiment, the social security system receives the purchase of the product from the client through the channel side before redeeming the fund product. When the client wants to purchase the fund product issued by the social security system, the social security system judges whether the channel side has the transaction account in the social security system. If the channel side does not have the transaction account, opening of a transaction account is required; if the channel side has the transaction account, the purchase of the fund product is enabled and the purchase application is submitted to the channel side.

The channel side generates the purchase file according to the purchase application provided by the client, and sends the purchase file to the social security system. The social security system receives the purchase file sent by the channel side and judges whether the channel side has the transaction account. If the channel side does not have the transaction account, the social security system receives an account opening file sent by the channel side to perform an account opening process to open the transaction account; if the channel side has the transaction account, the social security system verifies the purchase file. The verification of the purchase file includes a physical verification and a business verification. The social security system at first judges whether the physical verification succeeds or not. When the physical verification fails, the social security system outputs prompt information such that the administrator of the system can perform corresponding operations. When the physical verification succeeds, the social security system judges whether the business succeeds or not, and outputs, when the business verification fails, prompt information such that the administrator of the system can perform corresponding operations. The social security system stores, when the business verification succeeds, the purchase application information in the purchase business table and sends the purchase application information to the third party system through the pre-configured interface table.

The third party system reviews the received purchase application information, generates the purchase confirmation file when the review succeeds, and sends the purchase confirmation file to the social security system. It indicates the successful purchase of the fund product when the social security system receives the purchase confirmation file from the third party system based on the purchase application information. At this time, the social security system generates the result confirmation file based on the purchase confirmation file and sends the result confirmation file to the channel side such that the channel side can finish the purchase of the fund product. Thus, the purchase of the fund product is enabled and the reliability of the purchase is improved. After the channel side finishes the purchase of the fund product, the social security system receives the expiration redemption file from the channel side to redeem the fund product.

It is understood that after receiving the purchase confirmation file sent by the channel side, the social security system obtains a receiving time of the purchase confirmation file from the channel side and judges whether the receiving time is within a predetermined time range of the same day. If the receiving time is within the predetermined time range of the same day, the social security system judges whether the channel side has the transaction account and verifies the purchase file if the channel side has the transaction account. If the receiving time is not within the predetermined time range of the same day, the social security system judges whether the channel side has the transaction account in the predetermined time range of the next day. The predetermined time range can be flexibly set according to actual requirements.

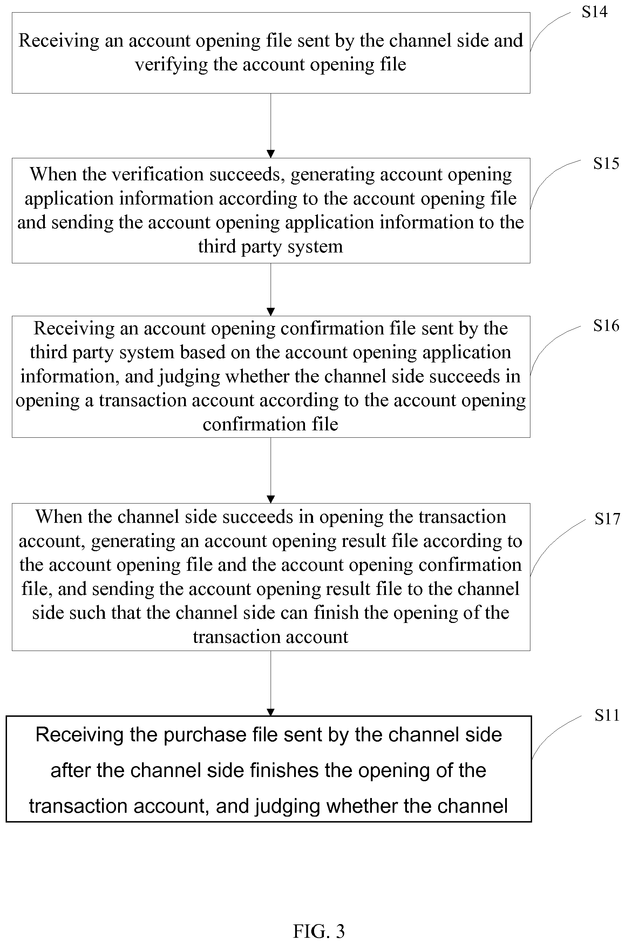

Referring to FIG. 3, a third embodiment based on the above data processing method of the second embodiment is provided. In third embodiment, the method further includes following steps before step S11:
step S14, receiving an account opening file sent by the channel side and verifying the account opening file;
step S15, when the verification succeeds, generating account opening application information according to the account opening file and sending the account opening application information to the third party system;
step S16, receiving an account opening confirmation file sent by the third party system based on the account opening application information, and judging whether the channel side succeeds in opening a transaction account according to the account opening confirmation file; and
step S17, when the channel side succeeds in opening the transaction account, generating an account opening result file according to the account opening file and the account opening confirmation file, and sending the account opening result file to the channel side such that the channel side can finish the opening of the transaction account.

Accordingly, step S11 includes receiving the purchase file sent by the channel side after the channel side finishes the opening of the transaction account, and judging whether the channel side has the transaction account.

In the method of this embodiment, before the social security system purchases the fund product, the client can open the transaction account through the channel side. For example, when the client wants to purchase the fund product issued by the social security system, the social security system at first determines whether the client has a fund account in the social security system; if the client has the fund account, the fund product can be purchased and the purchase application is sent to the channel side; if the client does not have the fund account, account opening is required. The client sends the account opening application to the channel side; the channel side generates the account opening file according to the purchase application from the client and sends the account opening file to the social security system.

The social security system receives the account opening file sent by the channel side and verifies the account opening file. The verification may include a physical verification and a business verification. The social security system at first judges whether the physical verification succeeds or not and outputs corresponding prompt information when the physical verifications fails such that the administrator of the social security system can perform operations accordingly. When the physical verification succeeds, the social security system judges whether the business verification succeeds or not and outputs corresponding prompt information when the business verification fails such that the administrator can perform operations accordingly. The social security system generates, when the business verification succeeds, the account opening application information according to the account opening file and sends the account opening application information to the third party system. The third party system reviews the account opening application information, generates the account opening confirmation file after the reviewing of the account opening application information, and sends the account opening confirmation file to the social security system.

The social security system receives the account opening confirmation file sent by the third party system based on the account opening application information, and judges whether the channel side succeeds in opening the account according to the account opening confirmation file. When the channel side succeeds in opening the account, the social security system generates the account opening result file according to the account opening file and the account opening confirmation file and sends the account opening result file to the channel side such that the channel side can finish the opening of the transaction account. After the channel side finishes the opening of the transaction account, the social security system receives the purchase file sent by the channel side and performs purchase of the fund product accordingly.

It is understood that, after receiving the account opening file sent by the channel side, the social security system obtains the receiving time of the account opening file sent by the channel side before verifying the account opening file. The social security system then judges whether the receiving time is within a predetermined time range of the same day. When the receiving time is within the predetermined time range of the same day, the social security system verifies the account opening file; otherwise, the social security system verifies the account opening file in the predetermined time range of the next day. The predetermined time range can be set flexibly based on actual situations.

In an embodiment, the social security system can store the account opening file to a temporary table after the verification of the account opening file succeeds, and send the account opening file to the third party system by calling an interface of the third party system. At this time, the third party system has returned account opening information such as the transaction account to the social security system such that the social security system can store the account opening information in an account opening confirmation table. The social security system generates the account opening application information from the account opening file of the unopened account, and sends the account opening application information to the third party system. The social security system receives the account opening confirmation file from the third party system, generates the account opening result file according to the account opening file and the account confirmation file after confirming that the channel side succeeds in opening the account, and sends the account opening result file to the channel side.

The social security system of the embodiment enables convenient processing of the account opening process, and thus improves the flexibility of the account opening.

Based on the first embodiment, a data processing method in accordance with a fourth embodiment is provided, including following steps after the step of verifying the expiration redemption file of the data processing method of the first embodiment:
when the verification of the purchase file fails, obtaining a type of an error of the purchase file;
when the type of the error indicates incorrect input of information, receiving an input instruction to modify data of the purchase file; and
when the type of the error indicates unreceiving of a specified file, temporarily stopping processing the data of the purchase file.

In the embodiment, during verifying the purchase file, the social security system can, when the verification fails, obtain the type of the error of the purchase file and process the data of the purchase file accordingly. The type of the error can indicate the incorrect input of information such as personal information or document names. When receiving the modifying information from the channel side based on the incorrect input of information, the social security system receives the input instruction according to the modifying information to modify the data of the purchase file.

When the type of the error indicates unreceiving of the specified file, that is, when the type of the error indicates the wrong receiving order of the files, for example, the purchase file sent by the channel side is received while the account opening file sent by the channel side is not received yet, the social security system temporarily stops processing the purchase file and judges whether the account opening file is received or not. When the account opening file is received, the social security system processes the account opening file and the purchase file in sequence; otherwise, the social security system keeps stopping processing the purchase file.

According to this embodiment, the social security system can process the data of the purchase file according to the type of the error of the purchase file when the verification of the purchase file fails, thereby improving the reliability of the verification.

Based on the first, second, third, and fourth embodiments, a data processing method of a fifth embodiment is provided, including following steps before the step of verifying the expiration redemption file:
obtaining a receiving time of the expiration redemption file sent by the channel side, and judging whether the receiving time is within a predetermined time range of the same day;
when the receiving time is within the predetermined time range of the same day, performing the step of verifying the expiration redemption file;
when the receiving time is not within the predetermined time range of the same day, performing the step of verifying the expiration redemption file in the predetermined time range of the next day.

In an embodiment, the social security system can be pre-configured with a daily switch such that the social security system can process the received data at a specified time each day. For example, the channel side can send the data to the social security system at any time; the daily switch is turned on at 9:00 am each data such that the social security system can process the received data and is turned off at 15:00 pm each day such that the data received after 15:00 pm is left to the next day for processing.

After receiving the expiration redemption file sent by the channel side, the social security system obtains the receiving time of the expiration redemption file sent by the channel side before verifying the expiration redemption file, and judges whether the receiving time is within the predetermined time range of the same day. When the receiving time is within the predetermined time range of the same day, the social security system verifies the expiration redemption file, otherwise, the social security system verifies the expiration redemption file in the predetermined time range of the next day. The predetermined time range can be flexibly set according to actual requirements.

The social security system can set the time for processing the received data rather than the time for receiving the data, to fit to the working time of the administrator of the system, thereby improving the flexibility and convenience of data processing of the social security system.

A person skill in the art should understand that the processes of the methods in the above embodiments can be, in full or in part, implemented by computer programs instruction underlying hardware; the programs can be stored in a computer-readable storage medium which can be a read-only memory (ROM), a disk, a disc, etc.

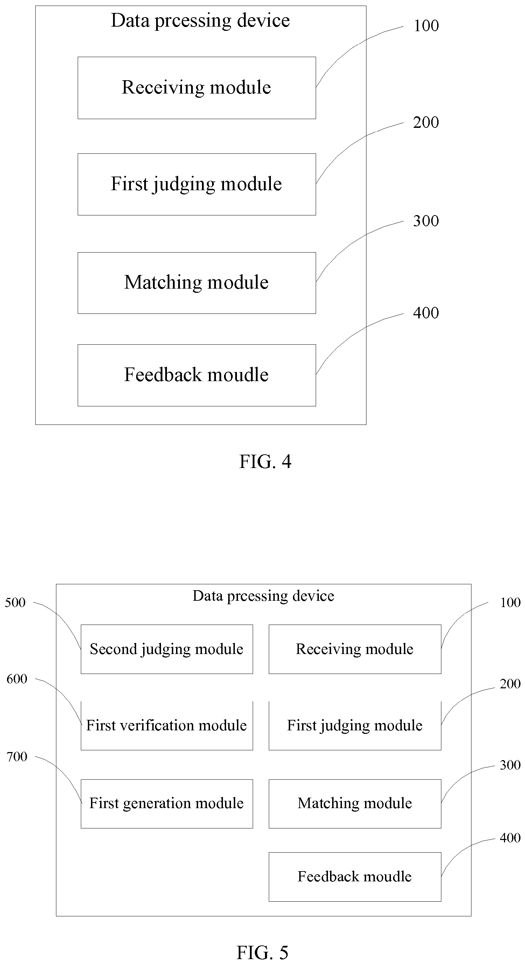

Referring to FIG. 4, a data processing device in accordance with a first embodiment is provided. The data processing device includes a receiving module 100, a first judging module 200, a matching module 300, and a feedback module 400.

The receiving module 100 is configured for receiving an expiration redemption file sent by a channel side and receiving a mandatory redemption file sent by a third party system.

The data processing device can be implemented in an insurance system which may be a social security system. The following descriptions are given based on that the insurance system is the social security system. The redemption of the fund may be an active redemption initiated by the client or a mandatory redemption initiated by the third party. Taking the mandatory redemption as an example, during the mandatory redemption of the fund initiated by the third party, when the fund product is redeemed through the social security system, an expiration redemption process is performed through the channel side, that is, the channel side sends the expiration redemption file to the social security system and the social security system receives the expiration redemption file from the channel side through the receiving module 100.

The channel side may be one which has built cooperation relationship with the social security system such as Lujinsuo, Wechat, and Jingdong. The expiration redemption file may be a standard template pre-configured in the social security system. The channel side generates the expiration redemption file by improving the standard template. The expiration redemption file may contain information including a transaction serial number, a transaction time, a bank account, a certificate type, personal information, a contact number, etc.

When the mandatory redemption of expired purchased fund product is initiated by the third party system, the third party system sends the mandatory redemption file to the social security system through an interface table interacted with the social security system. The social security system receives the mandatory redemption file through the receiving module 100. In some embodiments, the social security system may be a bank system which has built cooperation relationship with the social security system such as the TA system of Hang Seng Bank.

The first judging module 200 is configured for, when a verification of the expiration redemption file succeeds and the expiration redemption file is a closed one, judging whether redemption data contained in the expiration redemption file is identical with pre-stored purchase data.

The social security system verifies the received expiration redemption file. The verification of the expiration redemption file may include a physical verification and a business verification. The physical verification is configured for verifying a length and a numerical type of the expiration redemption file, while the business verification is configured for verifying an ID number or the bank account in the expiration redemption file.

The social security system at first judges whether the physical verification succeeds or not. When the physical verification fails, the social security system outputs prompt information such that an administrator of the system can perform operations according to the prompt information; when the physical verification succeeds, the social security system judges whether the business verification succeeds or not. When the business verification fails, the social security system outputs prompt information such that the administrator of the system can perform operations according to the prompt information; when the business verification succeeds, the social security system analyzes and stores the expiration redemption file in a temporary table, and judges whether the expiration redemption file is a closed one, that is, judges whether a period of the expiration redemption file is fixed.

When the expiration redemption file is not a closed one, the social security system outputs prompt information such that the administrator of the system can perform operations accordingly. When the expiration redemption file is a closed one, the first judging module 200 judges whether the redemption data contained in the expiration redemption file is identical with the pre-stored purchase data or not.

When the redemption data is not identical with the pre-stored purchase data, the social security outputs prompt information read in that the redemption data is not identical with the pre-stored purchase data, such that the administrator of the system can perform operations accordingly.

The matching module 300 is configured for, when the redemption data contained in the expiration redemption file is identical with the pre-stored purchase data and the mandatory redemption file requires full redemption on expiration, matching the expiration redemption file with the mandatory redemption file.

When the redemption data in expiration redemption file is identical with the pre-stored purchase data, the expiration redemption file is stored into a redemption business table from the temporary data to finish the redemption application, such that the expiration redemption file can be compared with data from a third party system. In addition, whether the mandatory redemption file requires full redemption on expiration or not is judged. When the mandatory redemption file requires full redemption on expiration, the matching module 300 matches the mandatory redemption file with the expiration redemption file with the pre-stored in the redemption business table.

The feedback module 400 is configured for, when the expiration redemption file is identical with the mandatory redemption file, generating a result confirmation file, informing the third party system and sending the result confirmation file to the channel side.

When the expiration redemption file is identical with the mandatory redemption file, it indicates that the redemption is successful, thus, the result confirmation file is generated and sent to the third party system to inform the third party system. The result confirmation file is also sent to the channel side to inform the channel side that the redemption is successful. The result confirmation file includes multiple pieces of data including information of the channel side and information related to the redemption and so on.

It is understood that when the redemption of the fund is actively initiated by the client through the channel side, the client performs the expiration redemption process through the channel side, that is, the channel side sends the expiration redemption file to the social security system and the social security system receives the expiration redemption file sent by the channel side. The social security system then verifies the expiration redemption file; and judges, if the verification succeeds, whether the expiration redemption file is a closed one. When the expiration redemption file is a closed one, the social security system judges whether the redemption data contained in the expiration redemption file is identical with the pre-stored purchase data or not. When the redemption data is identical with the pre-stored purchase data, the social security system sends the redemption data the third party system. After receiving the redemption fund from the third party system based on the redemption data, the social security system sends the redemption fund to the channel side to finish the redemption of the fund.

According to the device of the present disclosure, the social security system verifies the expiration redemption file after receiving the expiration redemption file sent by the channel side and the mandatory redemption file sent by the third party system; and judges, when the verification of the expiration redemption file succeeds and the expiration redemption file is a closed one, whether the redemption data contained in the expiration redemption file is identical with the pre-stored purchase data. The social security system matches the expiration redemption file with the mandatory redemption file when the redemption data is identical with the pre-stored purchase data and the mandatory file requires full redemption on expiration, generates the result confirmation file when the expiration redemption file is identical with the mandatory redemption file, informs the third party system, and sends the result confirmation file to channel side. Thus, the social security system can redeem the fund product purchased by the channel side conveniently, improving the convenience of data processing of the social security system.

Referring to FIG. 5, based on the data processing device of the first embodiment, a data processing device of a second embodiment is provided. The data processing device of the second embodiment further includes a second judging module 500, a first verification module 600, and a first generation module 700.

The second judging module 500 is configured for receiving a purchase file sent by the channel side and judging whether the channel side has a transaction account.

The first verification module 600 is configured for, if the channel side has the transaction account, verifying the purchase file, generating purchase application information according to the purchase file when the verification of the purchase file succeeds, and sending the purchase application information to the third party system.

The first generation module 700 is configured for receiving a purchase confirmation file sent by the third party system based on the purchase application information, generating a result confirmation file according to the purchase confirmation file, and sending the result confirmation file to the channel side such that the channel side can finish the purchase of the fund product.

The receiving module 100 is further configured for receiving the expiration redemption file sent by the channel side after the channel side finishes the purchase of the fund product, and receiving the mandatory redemption file sent by the third party system.

In this embodiment, the social security system receives the purchase of the product from the client through the channel side before redeeming the fund product. When the client wants to purchase the fund product issued by the social security system, the social security system judges whether the channel side has the transaction account in the social security system. If the channel side does not have the transaction account, opening of a transaction account is required; if the channel side has the transaction account, the purchase of the fund product is enabled and the purchase application is submitted to the channel side.

The channel side generates the purchase file according to the purchase application provided by the client, and sends the purchase file to the social security system. The social security system receives the purchase file sent by the channel side and judges whether the channel side has the transaction account through the second judging module 500. If the channel side does not have the transaction account, the social security system receives an account opening file sent by the channel side to perform an account opening process to open the transaction account; if the channel side has the transaction account, the social security system verifies the purchase file through the first verification module 600. The verification of the purchase file includes a physical verification and a business verification. The social security system at first judges whether the physical verification succeeds or not. When the physical verification fails, the social security system outputs prompt information such that the administrator of the system can perform corresponding operations. When the physical verification succeeds, the social security system judges whether the business succeeds or not, and outputs, when the business verification fails, prompt information such that the administrator of the system can perform corresponding operations. The social security system stores, when the business verification succeeds, the purchase application information in the purchase business table and sends the purchase application information to the third party system through the pre-configured interface table.

The third party system reviews the received purchase application information, generates the purchase confirmation file when the review succeeds, and sends the purchase confirmation file to the social security system. It indicates the successful purchase of the fund product when the social security system receives the purchase confirmation file from the third party system based on the purchase application information. At this time, the social security system generates, through the first generation module 700, the result confirmation file based on the purchase confirmation file and sends the result confirmation file to the channel side such that the channel side can finish the purchase of the fund product. Thus, the purchase of the fund product is enabled and the reliability of the purchase is improved. After the channel side finishes the purchase of the fund product, the social security system receives the expiration redemption file from the channel side to redeem the fund product.

It is understood that after receiving the purchase confirmation file sent by the channel side, the social security system obtains a receiving time of the purchase confirmation file from the channel side and judges whether the receiving time is within a predetermined time range of the same day. If the receiving time is within the predetermined time range of the same day, the social security system judges whether the channel side has the transaction account and verifies the purchase file if the channel side has the transaction account. If the receiving time is not within the predetermined time range of the same day, the social security system judges whether the channel side has the transaction account in the predetermined time range of the next day. The predetermined time range can be flexibly set according to actual requirements.

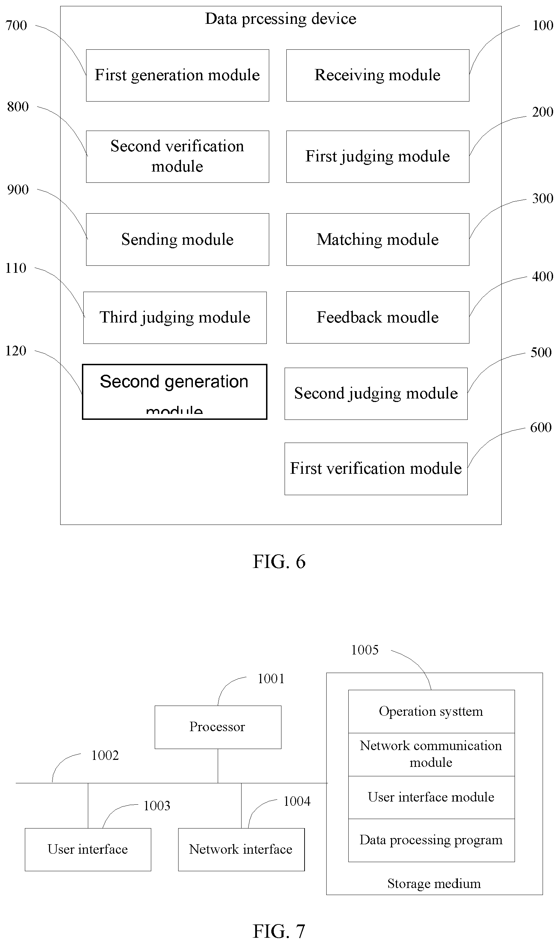

Referring to FIG. 6, based on the second embodiment, a data processing device of a third embodiment is provided. The data processing device of the third embodiment includes a second verification module 800, a sending module 900, a third judging module 110, and a second generation module 120.

The second verification module 800 is configured for receiving an account opening file sent by the channel side and verifying the account opening file.

The sending module 900 is configured for, when the verification succeeds, generating account opening application information according to the account opening file and sending the account opening application information to the third party system.

The third judging module 110 is configured for, receiving an account opening confirmation file sent by the third party system based on the account opening application information, and judging whether the channel side succeeds in opening the account according to the account opening confirmation file.

The second generation module 120 is configured for, when the channel side succeeds in opening the account, generating an account opening result file according to the account opening file and the account opening confirmation file, and sending the account opening result file to the channel side such that the channel side can finish the opening of the transaction account.

The second judging module 500 is further configured for receiving the purchase file sent by the channel and judging whether the channel side has the transaction account.

In this embodiment, before the social security system purchases the fund product, the client can open the transaction account through the channel side. For example, when the client wants to purchase the fund product issued by the social security system, the social security system at first determines whether the client has a fund account in the social security system; if the client has the fund account, the fund product can be purchased and the purchase application is sent to the channel side; if the client does not have the fund account, account opening is required. The client sends the account opening application to the channel side; the channel side generates the account opening file according to the purchase application from the client and sends the account opening file to the social security system.

The social security system receives the account opening file sent by the channel side and verifies the account opening file through the second verification module 800. The verification may include a physical verification and a business verification. The social security system at first judges whether the physical verification succeeds or not and outputs corresponding prompt information when the physical verifications fails such that the administrator of the social security system can perform operations accordingly. When the physical verification succeeds, the social security system judges whether the business verification succeeds or not and outputs corresponding prompt information when the business verification fails such that the administrator can perform operations accordingly. The social security system generates, when the business verification succeeds, the account opening application information according to the account opening file and sends the account opening application information to the third party system through the sending module 900. The third party system reviews the account opening application information, generates the account opening confirmation file after the reviewing of the account opening application information, and sends the account opening confirmation file to the social security system.

The social security system receives the account opening confirmation file sent by the third party system based on the account opening application information, and judges, through the third judging module 110, whether the channel side succeeds in opening the account according to the account opening confirmation file. When the channel side succeeds in opening the account, the social security system generates, through the second generation module 120, the account opening result file according to the account opening file and the account opening confirmation file and sends the account opening result file to the channel side such that the channel side can finish the opening of the transaction account. After the channel side finishes the opening of the transaction account, the social security system receives the purchase file sent by the channel side and performs purchase of the fund product accordingly.

It is understood that, after receiving the account opening file sent by the channel side, the social security system obtains the receiving time of the account opening file sent by the channel side before verifying the account opening file. The social security system then judges whether the receiving time is within a predetermined time range of the same day. When the receiving time is within the predetermined time range of the same day, the social security system verifies the account opening file; otherwise, the social security system verifies the account opening file in the predetermined time range of the next day. The predetermined time range can be set flexibly based on actual situations.

In an embodiment, the social security system can store the account opening file to a temporary table after the verification of the account opening file succeeds, and send the account opening file to the third party system by calling an interface of the third party system. At this time, the third party system has returned account opening information such as the transaction account to the social security system such that the social security system can store the account opening information in an account opening confirmation table. The social security system generates the account opening application information from the account opening file of the unopened account, and sends the account opening application information to the third party system. The social security system receives the account opening confirmation file from the third party system, generates the account opening result file according to the account opening file and the account confirmation file after confirming that the channel side succeeds in opening the account, and sends the account opening result file to the channel side.

The social security system of the embodiment enables convenient processing of the account opening process, and thus improves the flexibility of the account opening.

Based on the first embodiment, a data processing device in accordance with a fourth embodiment is provided. The data processing device of the fourth embodiment includes an obtaining module, a modifying module, and a temporary stopping module.

The obtaining module is configured for, when the verification of the purchase file fails, obtaining a type of an error of the purchase file.

The modifying module is configured for, when the type of the error indicates incorrect input of information, receiving an input instruction to modify data of the purchase file.

The temporary stopping module is configured for, when the type of the error indicates unreceiving of a specified file, temporarily stopping processing the data of the purchase file.

In the embodiment, during verifying the purchase file, the social security system can, when the verification fails, obtain the type of the error of the purchase file through the obtaining module and process the data of the purchase file accordingly. The type of the error can indicate the incorrect input of information such as personal information or document names. When receiving the modifying information from the channel side based on the incorrect input of information, the social security system receives, through the modifying module, the input instruction according to the modifying information to modify the data of the purchase file.

When the type of the error indicates unreceiving of the specified file, that is, when the type of the error indicates the wrong receiving order of the files, for example, the purchase file sent by the channel side is received while the account opening file sent by the channel side is not received yet, the social security system temporarily stops processing the purchase file through the temporary stopping module and judges whether the account opening file is received or not. When the account opening file is received, the social security system processes the account opening file and the purchase file in sequence; otherwise, the social security system keeps stopping processing the purchase file.

According to this embodiment, the social security system can process the data of the purchase file according to the type of the error of the purchase file when the verification of the purchase file fails, thereby improving the reliability of the verification.

Based on the first, second, third, and fourth embodiments, a data processing device of a fifth embodiment is provided. The data processing device of the fifth embodiment includes a fourth judging module and a processing module.

The fourth judging module is configured for obtaining a receiving time of the expiration redemption file sent by the channel side, and judging whether the receiving time is within a predetermined time range of the same day.

The processing module is configured for, when the receiving time is within the predetermined time range of the same day, calling the first verification module to verify the expiration redemption file, and when the receiving time is not within the predetermined time range of the same day, calling the first verification module to verify the expiration redemption file in the predetermined time range of the next day.

In an embodiment, the social security system can be pre-configured with a daily switch such that the social security system can process the received data at a specified time each day. For example, the channel side can send the data to the social security system at any time; the daily switch is turned on at 9:00 am each data such that the social security system can process the received data and is turned off at 15:00 pm each day such that the data received after 15:00 pm is left to the next day for processing.

After receiving the expiration redemption file sent by the channel side, the social security system, through the fourth judging module, obtains the receiving time of the expiration redemption file sent by the channel side before verifying the expiration redemption file and judges whether the receiving time is within the predetermined time range of the same day. When the receiving time is within the predetermined time range of the same day, the social security system verifies the expiration redemption file through the processing module, otherwise, the social security system verifies the expiration redemption file in the predetermined time range of the next day through the processing module. The predetermined time range can be flexibly set according to actual requirements.

The social security system can set the time for processing the received data rather than the time for receiving the data, to fit to the working time of the administrator of the system, thereby improving the flexibility and convenience of data processing of the social security system.

It is noted that, in hardware implementation, the receiving module 100, the first judging module 200, the matching module 300, and the feedback module 400 can be embedded in the data processing device as hardware or independent from the data processing device, or stored in a memory of the data processing device such that a processor can execute these modules to perform corresponding operations. The processor can be a central processing unit (CPU), a micro-processor, or single chip, etc.

Referring to FIG. 7, which is a schematic view of a data processing apparatus showing hardware implementation environment of the method and device of the above embodiments.

In some embodiments, the data processing apparatus can be a personal computer, a smart mobile phone, a tablet computer, an E-reader, or a portable computer terminal, etc.

As shown in FIG. 7, the data processing apparatus includes a processor 1001, e.g. a CPU, a network interface 1004, a user interface 1003, a storage medium 1005, and a communication bus 1002. The communication bus 1002 enables communications among the processor 1001, the network interface 1004, the user interface 1003, and the storage medium 1005. The user interface 1003 may be a standard wired interface or wireless interface, including a display, an input unit such as keyboard. The network interface 1004 can be a standard wired or wireless interface (e.g., a WI-FI interface). The storage medium 1003 can be a high speed RAM or a table non-volatile memory such as a disk memory. In some embodiments, the storage medium 1005 can be a storage device independent from the above processor 1001.

Optionally, the data processing apparatus can also include a camera, a RF (radio frequent), a sensor, an audio circuit, a wifi module, etc. the sensor can be an optical sensor, a motion sensor and so on. In some embodiments, the optical sensor can be an ambient light sensor or a proximity detector; the ambient light sensor is capable of adjusting a brightness of the display according to the ambient light level; the proximity detector is capable of turning off the display and/ or a backlight of the data processing apparatus when the data processing apparatus is moved to close to the user's ears. As a type of the motion sensor, a gravity acceleration sensor is capable of detecting an acceleration in each direction (of triaxial directions); when the data processing apparatus is still, the gravity sensor is capable of detecting a magnitude and a direction of the gravity of the data processing apparatus, thus, the gravity sensor can be used in applications of the data processing apparatus which involve the identifications of postures of the data processing apparatus, and in functions of the data processing apparatus involving identifications of vibrations (e.g., a pedometer, a knocking). In other embodiments, the data processing apparatus can further be configured with a gyroscope, a barometer, a hygrometer, a thermometer, an infrared sensors and so on, which is not given in detail hereinafter.

It is understood that the structure of the data processing apparatus shown in FIG. 7 is not intended to limit the data processing apparatus to this embodiment. In other embodiments, the data processing apparatus may include more or fewer parts, or combine certain parts, or have different arrangement of these parts shown in FIG. 7.

As shown in FIG. 7, the storage medium 1005 may include an operation system, a network communication module, a user interface module, and a data processing program.

The network interface 1004 is used for connecting the data processing apparatus with a background server such that the data processing apparatus can communicate with the background server; the user interface 1003 is used for connecting the data processing apparatus with a client terminal (user terminal) such that the data processing apparatus can communicate with the client; the client terminal includes a channel side and third party system; the processor 1001 is capable of executing the data processing grogram stored in the storage medium 1005 to perform following operations:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

In an embodiment, the processor 1001 is capable of executing the data processing program stored in the storage medium 1005 to perform following operations:
receiving a purchase file sent by the channel side and judging whether the channel side has a transaction account;
if the channel side has the transaction account, verifying the purchase file, generating purchase application information according to the purchase file when the verification of the purchase file succeeds, and sending the purchase application information to the third party system; and
receiving a purchase confirmation file sent by the third party system based on the purchase application information, generating the result confirmation file according to the purchase confirmation file, and sending the result confirmation file to the channel side such that the channel side can finish corresponding purchase;
the receiving an expiration redemption file sent by a channel side includes:
after the channel side finishes the purchase, receiving the mandatory redemption file sent by the channel side.

In an embodiment, the processor 1001 is capable of executing the data processing program stored in the storage medium 1005 to perform following operations:
receiving an account opening file sent by the channel side and verifying the account opening file;
when the verification of the account opening file succeeds, generating account opening application information according to the account opening file and sending the account opening application information to the third party system;
receiving an account opening confirmation file sent by the third party system based on the account opening application information, and judging whether the channel side succeeds in opening a transaction account according to the account opening confirmation file; and
when the channel side succeeds in opening the transaction account, generating an account opening result file according to the account opening file and the account opening confirmation file, and sending the account opening result file to the channel side such that the channel side can finish the opening of the transaction account;
and the receiving a purchase file sent by the channel side includes:
after the channel side finishes the opening of the transaction account, receiving the purchase file sent by the channel side.

In an embodiment, the processor 1001 is capable of executing the data processing program stored in the storage medium 1005 to perform following operations:
when the verification of the purchase file fails, obtaining a type of an error of the purchase file;
when the type of the error indicates incorrect input of information, receiving an input instruction to modify data of the purchase file; and
when the type of the error indicates unreceiving of a specified file, temporarily stopping processing the data of the purchase file.

In an embodiment, the processor 1001 is capable of executing the data processing program stored in the storage medium 1005 to perform following operations:
obtaining a receiving time of the expiration redemption file sent by the channel side and judging whether the receiving time is within a predetermined time range of the same day;
when the receiving time is within the predetermined time range, performing the verifying the expiration redemption file; and
when the receiving time is not within the predetermined time range, performing the verifying the expiration redemption file in the predetermined time range of the next day.

According to the present disclosure, the social security system verifies the expiration redemption file after receiving the expiration redemption file sent by the channel side and the mandatory redemption file sent by the third party system; and judges, when the verification of the expiration redemption file succeeds and the expiration redemption file is a closed one, whether the redemption data contained in the expiration redemption file is identical with the pre-stored purchase data. The social security system matches the expiration redemption file with the mandatory redemption file when the redemption data is identical with the pre-stored purchase data and the mandatory redemption file requires full redemption on expiraiton, generates the result confirmation file when the expiration redemption file is identical with the mandatory redemption file, informs the third party system, and sends the result confirmation file to the channel side. Thus, the social security system can redeem the fund product purchased by the channel side conveniently, improving the convenience of data processing of the social security system.

The present disclosure further provides a computer-readable storage medium having one or more programs stored therein; when being executed by one or more processors, the one or more programs are capable of causing the one or more processors to perform following steps:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

In an embodiment, when being executed by the one or more processors, the one or more programs further causes the one or more processors to perform following steps before the receiving an expiration redemption file sent by a channel side and a mandatory redemption file sent by a third party system:
receiving a purchase file sent by the channel side and judging whether the channel side has a transaction account;
if the channel side has the transaction account, verifying the purchase file, generating purchase application information according to the purchase file when the verification of the purchase file succeeds, and sending the purchase application information to the third party system; and
receiving a purchase confirmation file sent by the third party system based on the purchase application information, generating the result confirmation file according to the purchase confirmation file, and sending the result confirmation file to the channel side such that the channel side can finish corresponding purchase;
the receiving an expiration redemption file sent by a channel side includes:
after the channel side finishes the purchase, receiving the mandatory redemption file sent by the channel side.

In an embodiment, when being executed by the one or more processors, the one or more programs further causes the one or more processors to perform following steps before the receiving a purchase file sent by the channel side and judging whether the channel side has a transaction account:
receiving an account opening file sent by the channel side and verifying the account opening file;
when the verification of the account opening file succeeds, generating account opening application information according to the account opening file and sending the account opening application information to the third party system;
receiving an account opening confirmation file sent by the third party system based on the account opening application information, and judging whether the channel side succeeds in opening a transaction account according to the account opening confirmation file; and
when the channel side succeeds in opening the transaction account, generating an account opening result file according to the account opening file and the account opening confirmation file, and sending the account opening result file to the channel side such that the channel side can finish the opening of the transaction account;
and the receiving a purchase file sent by the channel side includes:
after the channel side finishes the opening of the transaction account, receiving the purchase file sent by the channel side.

In an embodiment, when being executed by the one or more processors, the one or more programs further causes the one or more processors to perform following steps after the verifying the purchase file:
when the verification of the purchase file fails, obtaining a type of an error of the purchase file;
when the type of the error indicates incorrect input of information, receiving an input instruction to modify data of the purchase file; and
when the type of the error indicates unreceiving of a specified file, temporarily stopping processing the data of the purchase file.

In an embodiment, when being executed by the one or more processors, the one or more programs further causes the one or more processors to perform following steps before the when a verification of the expiration redemption file succeeds:
obtaining a receiving time of the expiration redemption file sent by the channel side and judging whether the receiving time is within a predetermined time range of the same day;
when the receiving time is within the predetermined time range, performing the verifying the expiration redemption file; and
when the receiving time is not within the predetermined time range, performing the verifying the expiration redemption file in the predetermined time range of the next day.

A person skill in the art should understand that the processes of the methods in the above embodiments can be, in full or in part, implemented by computer programs instruction underlying hardware; the programs can be stored in a computer-readable storage medium which can be a read-only memory (ROM), a disk, a disc, etc.

It is to be noted that the term "including", "comprising", or any other variation thereof is intended to encompass a non-exclusive inclusion herein so that a process, method, article, or device including/ comprising a set of elements includes not only the stated elements, but other elements not expressly listed, or elements inherent to such processes, methods, articles, or devices. In the absence of further limitations, the element defined by the phrase "including/ comprising one..." do not preclude the presence of additional identical elements in the process, method, article, or apparatus that includes the element.

The embodiments of the present disclosure have been described for purpose of illustration only and are not to be intended as representing the pros and cons of the embodiments.

It will be apparent to those skilled in the art from the foregoing description that the embodiments described above may be implemented by means of software plus the necessary general-purpose hardware platform. Although the embodiments described above may also be implemented by hardware, the former would be advantages in many cases. On the basis of such as understanding, the substantial technical solution, or the part which contributes to the prior art, or all or part of the technical solution, of the disclosure, may be embodied as software products. Computer software products can be stored in a storage medium, e.g., ROM/ RAM, magnetic disk, or optical disk, and include multiple instructions causing a terminal device, e.g., a mobile phone, a computer, a server, a condictions, a network device, to execute all or part of the methods as described herein in various embodiments.

The contents described above are only preferred embodiments of the present disclosure, but the scope of the present disclosure is not limited to the embodiments. Any ordinarily skilled in the art would make any modifications or replacements to the embodiments in the scope of the present disclosure, and these modifications or replacements should be included in the scope of the present disclosure. Thus, the scope of the present disclosure should be subjected to the claims.

## Claims

1. A data processing method, being applicable in an insurance system, comprising:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

2. The data processing method of claim 1, wherein before the receiving an expiration redemption file sent by a channel side and a mandatory redemption file sent by a third party system, the method further comprises:
receiving a purchase file sent by the channel side and judging whether the channel side has a transaction account;
if the channel side has the transaction account, verifying the purchase file, generating purchase application information according to the purchase file when the verification of the purchase file succeeds, and sending the purchase application information to the third party system; and
receiving a purchase confirmation file sent by the third party system based on the purchase application information, generating the result confirmation file according to the purchase confirmation file, and sending the result confirmation file to the channel side such that the channel side can finish corresponding purchase;
the receiving an expiration redemption file sent by a channel side comprises:
after the channel side finishes the purchase, receiving the mandatory redemption file sent by the channel side.

3. The data processing method of claim 2, wherein before the receiving a purchase file sent by the channel side and judging whether the channel side has a transaction account, the method further comprises:
receiving an account opening file sent by the channel side and verifying the account opening file;
when the verification of the account opening file succeeds, generating account opening application information according to the account opening file and sending the account opening application information to the third party system;
receiving an account opening confirmation file sent by the third party system based on the account opening application information, and judging whether the channel side succeeds in opening a transaction account according to the account opening confirmation file; and
when the channel side succeeds in opening the transaction account, generating an account opening result file according to the account opening file and the account opening confirmation file, and sending the account opening result file to the channel side such that the channel side can finish the opening of the transaction account;
and the receiving a purchase file sent by the channel side comprises:
after the channel side finishes the opening of the transaction account, receiving the purchase file sent by the channel side.

4. The data processing method of claim 2, after the verifying the purchase file, the method further comprises:
when the verification of the purchase file fails, obtaining a type of an error of the purchase file;
when the type of the error indicates incorrect input of information, receiving an input instruction to modify data of the purchase file; and
when the type of the error indicates unreceiving of a specified file, temporarily stopping processing the data of the purchase file.

5. The data processing method of claim 1, wherein before the when a verification of the expiration redemption file succeeds, the method further comprises:
obtaining a receiving time of the expiration redemption file sent by the channel side and judging whether the receiving time is within a predetermined time range of the same day;
when the receiving time is within the predetermined time range, performing the verifying the expiration redemption file; and
when the receiving time is not within the predetermined time range, performing the verifying the expiration redemption file in the predetermined time range of the next day.

6. The data processing method of claim 3, wherein before the when a verification of the expiration redemption file succeeds, the method further comprises:
obtaining a receiving time of the expiration redemption file sent by the channel side and judging whether the receiving time is within a predetermined time range of the same day;
when the receiving time is within the predetermined time range, performing the verifying the expiration redemption file; and
when the receiving time is not within the predetermined time range, performing the verifying the expiration redemption file in the predetermined time range of the next day.

7. The data processing method of claim 1, wherein after the judging whether redemption data contained in the expiration redemption file is identical with pre-stored purchase data, the method further comprises:
when the redemption data contained in the expiration redemption file is not identical with the pre-stored purchase data, outputting corresponding prompt information.

8. The data processing method of claim 1, wherein after the receiving the receiving an expiration redemption file sent by a channel side, the method further comprises:
when the verification of the received expiration redemption file succeeds and the expiration redemption file is a closed one, judging whether the redemption data contained in the expiration redemption file is identical with the pre-stored purchase data; and
when the redemption data contained in the expiration redemption file is identical with the pre-stored purchase data, sending the redemption data to the third party system, and sending redemption fund to the channel side when receiving the redemption fund sent by the third party system based on the redemption data.

9. A data processing device, being applicable in an insurance system, comprising:
a receiving module, configured for receiving an expiration redemption file sent by a channel side and a mandatory redemption file sent by a third party system;
a first judging module, configured for, when a verification of the expiration redemption file succeeds and the expiration redemption file is a closed one, judging whether redemption data contained in the expiration redemption file is identical with pre-stored purchase data;
a matching module, configured for, when the redemption data contained in the expiration redemption file is identical with the pre-stored purchase data and the mandatory redemption file requires full redemption on expiration, matching the expiration redemption file with the mandatory redemption file; and
a feedback module, configured for, when the expiration redemption file is identical with the mandatory redemption file, generating a result confirmation file, informing the third party system, and sending the result confirmation file to the channel side.

10. The data processing device of claim 9, further comprising:
a second judging module, configured for receiving a purchase file sent by the channel side and judging whether the channel side has a transaction account;
a first verification module, configured for, if the channel side has the transaction account, verifying the purchase file, generating purchase application information according to the purchase file when the verification of the purchase file succeeds, and sending the purchase application information to the third party system; and
a first generation module, configured for receiving a purchase confirmation file sent by the third party system based on the purchase application information, generating the result confirmation file according to the purchase confirmation file, and sending the result confirmation file to the channel side such that the channel side can finish corresponding purchase;
and the receiving module is further configured for, after the channel side finishes the purchase, receiving the mandatory redemption file sent by the channel side.

11. The data processing device of claim 10, further comprising:
a sending module, configured for receiving an account opening file sent by the channel side and verifying the account opening file;
a sending module, configured for, when the verification of the account opening file succeeds, generating account opening application information according to the account opening file and sending the account opening application information to the third party system;
a third judging module, configured for, receiving an account opening confirmation file sent by the third party system based on the account opening application information, and judging whether the channel side succeeds in opening a transaction account according to the account opening confirmation file; and
a second generation module, configured for, when the channel side succeeds in opening the transaction account, generating an account opening result file according to the account opening file and the account opening confirmation file, and sending the account opening result file to the channel side such that the channel side can finish the opening of the transaction account;
and the second judging module is further configured for, after the channel side finishes the opening of the transaction account, receiving the purchase file sent by the channel side.

12. The data processing device of claim 10, further comprising:
an obtaining module, configured for, when the verification of the purchase file fails, obtaining a type of an error of the purchase file;
a modifying module, configured for, when the type of the error indicates incorrect input of information, receiving an input instruction to modify data of the purchase file; and
a temporary stopping module, configured for, when the type of the error indicates unreceiving of a specified file, temporarily stopping processing the data of the purchase file.

13. The data processing device of claim 9, further comprising:
a fourth judging module, configured for obtaining a receiving time of the expiration redemption file sent by the channel side and judging whether the receiving time is within a predetermined time range of the same day;
a processing module, configured for, when the receiving time is within the predetermined time range, verifying the expiration redemption file through the first verification module, and when the receiving time is not within the predetermined time range, verifying the expiration redemption file through the first verification module in the predetermined time range of the next day.

14. The data processing device of claim 11, further comprising:
a fourth judging module, configured for obtaining a receiving time of the expiration redemption file sent by the channel side and judging whether the receiving time is within a predetermined time range of the same day; and
a processing module, configured for, when the receiving time is within the predetermined time range, verifying the expiration redemption file through the first verification module, and when the receiving time is not within the predetermined time range, verifying the expiration redemption file through the first verification module in the predetermined time range of the next day.

15. A data processing apparatus, comprising a storage medium and a processor; the processing being configured for executing a data processing program stored in the storage medium to perform following steps:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

16. The data processing apparatus of claim 15, wherein the processor is further configured for executing the data processing program stored in the storage medium, to perform following steps before the receiving an expiration redemption file sent by a channel side and a mandatory redemption file sent by a third party system:
receiving a purchase file sent by the channel side and judging whether the channel side has a transaction account;
if the channel side has the transaction account, verifying the purchase file, generating purchase application information according to the purchase file when the verification of the purchase file succeeds, and sending the purchase application information to the third party system; and
receiving a purchase confirmation file sent by the third party system based on the purchase application information, generating the result confirmation file according to the purchase confirmation file, and sending the result confirmation file to the channel side such that the channel side can finish corresponding purchase;
the receiving an expiration redemption file sent by a channel side comprises:
after the channel side finishes the purchase, receiving the mandatory redemption file sent by the channel side.

17. The data processing apparatus of claim 16, wherein the processing is further configured for executing the data processing program stored in the storage medium, to perform following steps before the receiving a purchase file sent by the channel side and judging whether the channel side has a transaction account:
receiving an account opening file sent by the channel side and verifying the account opening file;
when the verification of the account opening file succeeds, generating account opening application information according to the account opening file and sending the account opening application information to the third party system;
receiving an account opening confirmation file sent by the third party system based on the account opening application information, and judging whether the channel side succeeds in opening a transaction account according to the account opening confirmation file; and
when the channel side succeeds in opening the transaction account, generating an account opening result file according to the account opening file and the account opening confirmation file, and sending the account opening result file to the channel side such that the channel side can finish the opening of the transaction account;
and the receiving a purchase file sent by the channel side comprises:
after the channel side finishes the opening of the transaction account, receiving the purchase file sent by the channel side.

18. A computer-readable storage medium having one or more programs stored therein which, when be executed by one or more processors, causes the one or more processors to perform following steps:
receiving an expiration redemption file sent by a channel side and a mandatory redemption file sent by a third party system;
when a verification of the expiration redemption file succeeds and the expiration redemption file is a closed one, judging whether redemption data contained in the expiration redemption file is identical with pre-stored purchase data;
when the redemption data contained in the expiration redemption file is identical with the pre-stored purchase data, and the mandatory redemption file requires full redemption on expiration, matching the expiration redemption file with the mandatory redemption file; and
when the expiration redemption file is identical with the mandatory redemption file, generating a result confirmation file, informing the third party system, and sending the result confirmation file to the channel side.

19. The computer-readable storage medium of claim 18, further being configured for performing following steps before the receiving an expiration redemption file sent by a channel side and a mandatory redemption file sent by a third party system:
receiving a purchase file sent by the channel side and judging whether the channel side has a transaction account;
if the channel side has the transaction account, verifying the purchase file, generating purchase application information according to the purchase file when the verification of the purchase file succeeds, and sending the purchase application information to the third party system; and
receiving a purchase confirmation file sent by the third party system based on the purchase application information, generating the result confirmation file according to the purchase confirmation file, and sending the result confirmation file to the channel side such that the channel side can finish corresponding purchase;
the receiving an expiration redemption file sent by a channel side comprises:
after the channel side finishes the purchase, receiving the mandatory redemption file sent by the channel side.

20. The computer-readable storage medium of claim 19, further being configured for performing following steps before the receiving a purchase file sent by the channel side and judging whether the channel side has a transaction account:
receiving an account opening file sent by the channel side and verifying the account opening file;
when the verification of the account opening file succeeds, generating account opening application information according to the account opening file and sending the account opening application information to the third party system;
receiving an account opening confirmation file sent by the third party system based on the account opening application information, and judging whether the channel side succeeds in opening a transaction account according to the account opening confirmation file; and
when the channel side succeeds in opening the transaction account, generating an account opening result file according to the account opening file and the account opening confirmation file, and sending the account opening result file to the channel side such that the channel side can finish the opening of the transaction account;
and the receiving a purchase file sent by the channel side comprises:
after the channel side finishes the opening of the transaction account, receiving the purchase file sent by the channel side.
